Europäisches Patentamt

European Patent Office

Office européen des brevets

(11) Publication number: **0 341 736**
**A1**

# (12) EUROPEAN PATENT APPLICATION

(21) Application number: **89108597.9**

(22) Date of filing: **12.05.89**

(51) Int. Cl.⁴: **C05F 11/00 , C05G 1/00**

(30) Priority: **13.05.88 AT 1252/88**

(43) Date of publication of application:
**15.11.89 Bulletin 89/46**

(84) Designated Contracting States:
**AT CH DE FR IT LI SE**

(71) Applicant: BIOCHEMIE Gesellschaft m.b.H.

A-6250 Kundl Tirol(AT)

(72) Inventor: **Badawy, Nabeel**
**Albertgasse 55/1/12**
**A-1080 Vienna(AT)**
Inventor: **Naschberger, Stefan**

**A-6311 Oberau 339(AT)**
Inventor: **Pirich, Eberhard**
**Felix-Mottel-Strasse 32**
**A-1190 Vienna(AT)**
Inventor: **Schäfer, Konrad**
**Liesfeld 39**
**A-6250 Kundl(AT)**

(74) Representative: **Kleine Deters, Johannes et al**
**Sandoz AG Patentabteilung**
**CH-4002 Basel(CH)**

(54) Fertilizer comprising bacterial biomass, process for its production and its use as a special organic fertilizer.

(57) The invention relates to a fertilizer of bacterial biomass and potassium magnesium fertilizer for fertilizing alpine pasture and ski slopes, and revitalising forest plantations.

**EP 0 341 736 A1**

# FERTILIZER COMPRISING BACTERIAL BIOMASS, PROCESS FOR ITS PRODUCTION AND ITS USE AS A SPECIAL ORGANIC FERTILIZER

This invention relates to a bacterial biomass, a process for its production and its use in an organic fertilizer. The bacterial biomass of this invention is derived from the liquid organic waste product that is obtained in an antibiotic fermentation process. The liquid organic waste product, which is hereinafter called the liquid phase, refers to the liquid component of an antibiotic fermentation, from which the antibiotic has been isolated and removed. The bacterial biomass of this invention is produced by subjecting the so-called liquid phase to a further fermentation. Optionally, the liquid organic waste products from different fermentation processes may be combined with the liquid phase, prior to the further fermentation.

The fertilizer of this invention comprises an admixture of bacterial biomass and a potassium magnesium fertilizer which serves as a potassium and magnesium supplement to the bacterial biomass. The fertilizer is especially suitable for forest plantations containing conifers (coniferae) such as spruce (picea), fir (abies) and the like, recultivation and for improving alpine pastures.

The use of waste products from penicillin fermentation to produce various products is described in literature. BE 505 453 describes a process for the production of fertilizers, in which waste products from penicillin fermentation, which have strong fermenting activity on cellulose, are used to produce compost. DD 139 083 describes a process for producing a penicillin-free dry mycelium product, which can serve as a feed additive, fertilizer or source of nitrogen for fermentation processes. In this process, the mycelium is suspended in water, after which the suspension is brought to a pH value of >5 with mineral acid. This aqueous mycelium suspension then undergoes spray-drying at 150-300° C. EP 60 407 describes a process for producing penicillin-free mycelium masses from penicillin production cultures (=wet mycelium), in which the residual penicillin present is removed in such a way that the wet mycelium undergoes anaerobic lactic acid fermentation using penicillin-resistant lactobacilli. A further possibility of using waste products from penicillin fermentation is described in GB 649 818. Here, the solid fermentation residues are added to nutrients, in order to produce for example vitamin B12 or riboflavin. The production of feed additives which is derived from penicillin fermentation is known. US 3,928,642 thus describes a method in which mycelium waste products from penicillin production are heated under pressure to 140 to 200° C and subsequently dried, so as to be used as feed additives.

The use of waste waters and slurry of various origins and compositions for the production of fertilizers is practiced world-wide. One problem, however, with the use of waste waters is that harmful materials removed from the waste water generally become concentrated in the so-called slurry. One method for dealing with this problem is disclosed in DE 2617 964, wherein the slurry is mixed with calcined lime, after which this mixture can be used as a complete fertilizer.

The inclusion of bacteria to decompose waste water products is also known. JP KOKAI 61/40 886 describes the production of an organic fertilizer by the fermentation of vegetable waste products, a raw sewage cake and sawdust, with aerobic bacteria.

The use of waste water from the biochemical and petroleum refining industry is described in JP KOKAI 70/14 091. Here, photosynthetic bacteria for use in fertilizer are cultivated in solutions which contain diverse organic salts, sodium salts of low fatty acids, and waste water from the above-mentioned industries.

Liquid organic waste products such as slurries from communal sewage plants or refuse composts are typically contaminated with heavy metals and other hazardous materials. In contrast, the bacterial biomass of this invention is substantially free from heavy metals and other hazardous materials, since the materials used in the further fermentation are obtained from sterile processes. Only non-hazardous raw materials (e.g. soya meal, various types of sugar, trace elements and vitamins) are used for fermentation of the active materials (e.g., antibiotics, proteases). Consequently, the bacterial biomass produced from the further fermentation also has no undesirable heavy metals or other hazardous materials. A further advantage of the bacterial biomass of this invention is the high content of nutrients. The content of nutrients is many times that of communal slurries and refuse composts.

The special property of the fertilizer containing bacterial biomass of this invention can be seen in its effect on the micro-organisms and small invertebrates in the soil. It can be demonstrated under laboratory conditions that the respiratory activity of bacteria and fungi in the soil is considerably increased. After 21 days, the activity is still more than double that of the unfertilized control. Outdoors, the increased activity is maintained for more than a year, as corresponding tests have shown. The invertebrates are also enhanced more with the fertilizer containing bacterial biomass of this invention than with mineral fertilizers. The number of nematodes is four times higher than after mineral fertilization and 200 times higher than in the unfertilized area.

A particularly suitable use for the fertilizer of this application is on alpine pastures and ski slopes. This involves the substitution of commercial fertilizers such as stable manure, dung water or liquid manure. These can only be applied within a close proximity to buildings in the alpine pasture or ski slopes. A dried fertilizer containing bacterial biomass, however, is easily transportable and can therefore also be used on poorly accessible terrain.

Furthermore, the bacterial biomass fertilizer can also be used to revitalise forest plantations, especially pine and spruce plantations, which have restricted vitality as a result of incorrect management and/or environmental stress. Large parts of forests have had their vitality impaired by mono-cultivation, forest pasturage, removal of forest debris, and in recent decades especially the contamination with harmful materials. The aggregate of all these factors is summarised by the term "forest death".

There are many causes of forest death. Exact scientific proof that a certain harmful material or a specific method of management is the single cause has until now not been found. The climate (dryness, frost etc.) is also frequently mentioned as a source factor.

A significant detrimental effect is caused by the addition of nitrates. Up to 50 kg/ha has been measured on unfavourably exposed areas, causing a nutrient imbalance in the soil. An excess supply of nitrogen leads to mobilisation of all the remaining nutrients and thus, depending on the location, eventually leads to exhaustion of individual nutrient elements. The deficiency theory for magnesium is well documented. In all cases an improvement in the state of health could be attained by replenishing the magnesium through fertilization.

A further essential cause of forest death can be seen in the increasing acidification of the forest soil. The increase in sulphur and nitrates is responsible for some of the damage. The consequence of the damage is increased erosion of calcium, magnesium and potassium. In addition, the living conditions for the soil bacteria and soil fungi are worsened.

Oxidants are also regarded as causes of damage. Although it has until now not been possible to find exact proof, there is much support for the theory that ozone plays a part in the deteriorating conditions of the forests.

Recently, biological and epidemiological factors have increasingly be taken into account. The accumulation of raw humus leads to the conclusion that there is reduced activity of the micro-organisms and small invertebrate. With this restriction, there is a break in the nutrient cycle. The nutrient deficiency brought about by erosion is also increased.

A forest is thus only healthy and alive if no harmful materials are introduced and the soil contains all nutrients in sufficient quantities. Furthermore, energetic soil flora are necessary, for only in this way are the nutrients suitably reacted. As is known, the symbiosis between mycorrhiza fungus and plant roots is of essential importance for forest trees.

A suitable method for producing bacterial biomass for use in the fertilizer of this invention is as follows:

A typical antibiotic fermentation broth consists of a solid component which contains, for example, a fungus, and a liquid component which contains the antibiotic. The solid component may be separated from the liquid componenet by any conventional separation means, such as by centrifuge. The antibiotic is then isolated and removed from the liquid component by methods known in the art, for example, by extraction with an organic solvent such as butyl acetate, to yield the so-called liquid phase. The liquid phase is treated with a suitable neutralizing agent such as a calcium hydroxide solution to effect neutralization. Optionally, the liquid phase may be combined with the liquid organic waste products from different fermentation processes. Such additional liquid organic waste products serve as further sources of nutrient and bacteria.

The liquid phase is subsequently subjected to a further fermentation in an appropriate vessel, such as an agitating fermentation vessel. During the fermentation process, the liquid phase is suitably kept at ambient or slightly warmer temperatures, e.g. 25-35°C. Preferably, the temperature is kept constant at 30°C. Oxygen is added to the fermentation vessel by conventional means, such as by introducing air. Air may be introduced at a rate depending on the particular composition of the filtrate, but it will typically be in the range of 5 to 10 $m^3$ of air per hour per $m^3$ of fermentation volume, more typically about 7 $m^3$ per hour per $m^3$ of fermentation volume. The air, in addition to being a source of oxygen, is a source of bacteria for the fermentation process. The bacteria population present in the fermentation vessel consumes the available nutrients to form the bacterial biomass of this invention.

After a retention time of 20 to 24 hours, precipitation of the bacterial biomass is attained by adding a precipitation agent such as $FeClSO_4$, at a rate of about 5 to 10 l of 41 % solution/$m^3$ of fermentation volume. Separation is effected by any suitable separation technique, e.g., by decanting. The separated moist bacterial biomass typically contains about 85 % residual water, so that further transport to a drier can take place using a thick slurry pump. In a suitable drier, such as a rotadisc drier (contact drier), the water content can be reduced to 3-6 %. The dry product of bacterial biomass is then heated to a temperature of

3

about 130 to 150° C for a duration of 4 to 8 hours. The bacterial biomass is further processed in a pelletizer into a crushable granulate.

The liquid phase from any conventional antibiotic fermentation process may be used in this invention, although the liquid phase from a penicillin fermentation process is preferred. Suitable sources of liquid organic waste products to be optionally combined with the liquid phase are different antibiotic fermentations, such as cephalosporin and chloramphenicol fermentation, as well as protease and ciclosporin fermentations.

To balance the nutrients, potassium magnesium fertilizer is admixed with the bacterial biomass. The fertilizer of this invention thereby contains from about 90 to 96 % by weight of bacterial biomass and from 4 to 10 % by weight of potassium magnesium fertilizer. Preferably the fertilizer contains about 94 % bacterial biomass and 6 % potassium magnesium fertilizer. A suitable potassium magnesium fertilizer is available under the name PatentkaliTM. Optional granulating agents such as about 1% of animal fat, e.g., stearic acid may also be added.

The application rate of the fertilizer of this invention is dependent on various factors, including the soil quality. In general satisfactory results will be obtained when applying from 500 kg to 2500 kg of the fertilizer per hectare per year.

The fertilizer of this invention has on average the following composition by weight:

| dry mass 90-97 %, e.g. | 94 % | zinc | 36 ppm |
|---|---|---|---|
| organic substance | at least 55 % | manganese | 80 ppm |
| organically bound nitrogen, 4.9 to 6.1%, e.g. | 5.5 % | iron | 64.000 ppm |
| $P_2O_5$ 3.9 to 5%, e.g. | 4.3 % | lead | 4 ppm |
| $K_2O$ 2.9 to 3.7%, e.g. | 3.3 % | cadmium | 1 ppm |
| CaO 7 to 9%, e.g. | 8.0 % | chromium | 12 ppm |
| MgO 0.8 to 1.4%, e.g. | 1.1 % | cobalt | 4 ppm |
| copper | 11 ppm | nickel | 4 ppm |

This analysis shows that there is no heavy metals problem, and that the content of beneficial components is adequate. As with most organic fertilizers, the precise composition of the fertilizer may vary somewhat.

In the following examples, several applications of the fertilizer of this invention are demonstrated.

**Example 1: Fertilization of alpine pasture:**

| pasture yield (dry substance) in deciton/hectare | | | | | | | | |
|---|---|---|---|---|---|---|---|---|
| sites | FALKERT (Austria) | | | | GERLITZE (Austria) | | | |
| | 1 | 2 | 3 | 4 | 1 | 2 | 3 | 4 |
| | unfertilised | BBM* | mineral fert. | stable manure | unfertilised | BBM | mineral fert. | stable manure |
| 1983 | 15.5 | 24.9 | 31.7 | 17.0 | | | | |
| 1984 | 18.5 | 28.8 | 28.6 | 20.0 | 13.1 | 9.0 | 11.8 | 7.8 |
| 1985 | 17.6 | 44.6 | 52.8 | 39.6 | 14.2 | 19.4 | 24.7 | 20.8 |
| 1986 | 19.8 | 47.2 | 48.6 | 46.6 | 17.0 | 29.5 | 35.5 | 25.3 |
| Average | 17.8 | 36.4 | 40.4 | 30.8 | 14.8 | 19.3 | 24.0 | 18.0 |
| %** | 100 | 204 | 227 | 173 | 100 | 130 | 162 | 121 |

\* BBM hereinafter refers to a fertilizer according to this invention consisting of 94% bacterial biomass and 6% potassium magnesium fertilizer.

\*\* % indicates the increase in pasture yield as compared with the unfertilized sample ( = 100).

1 = unfertilized;

2 = BBM fertilizer applied at 750 kg/ha;

3 = mineral fertilizer, applied per hectare as 300 kg Nitramoncal[tm] (nitrate source), 100 kg Thomas phosphate, and 150 kg potash salt;

4 = stable manure applied at 19 ton/ha.

The pasture yield refers to the dry weight of grass grown (hereinafter referred to as dry substance (DS) in the alpine pasture. The tests show that the fertilizer of this invention comprising bacterial biomass and a potassium magnesium fertilizer is very suitable for improving the yield of alpine pastures. The effectiveness of the fertilizer is comparable with that of stable manure and has the additional advantage that the small amount required (0.75 t of BBM compared with 19 t of stable manure) facilitates transport to remote or poorly-accessible areas of pasture. Apart from the beneficial effect on yield, the acceptance of pastures that are treated with fertilizers to grazing cattle is important. It has been observed that the areas treated with fertilizer of this invention are well received by grazing cattle.

**Example 2: Fertilization of spruce plants (indoor greenhouse)**

| | unfertilised | mineral fertilizer* | BBM | | | |
|---|---|---|---|---|---|---|
| application rate g/plant) | | 10 | 5 | 10 | 20 | 30 |
| weight (DS in g) | | | | | | |
| needles | 1.36 | 1.48 | 1.84 | 1.69 | 2.23 | 1.61 |
| axial shoots | 1.52 | 1.59 | 1.99 | 1.70 | 2.00 | 1.37 |
| roots | 2.91 | 2.83 | 3.50 | 2.90 | 3.37 | 2.42 |
| size | | | | | | |
| terminal shoots (cm) 1st year | 2.58 | 3.68 | 6.26 | 5.38 | 5.66 | 5.12 |
| neck of root (mm) 2nd year | 5.28 | 5.25 | 5.80 | 5.29 | 5.56 | 4.85 |
| appearance | | | | | | |
| no.of side shoots | 8.8 | 11.6 | 10.8 | 10.9 | 14.6 | 11.3 |
| needle color 1st yr | 2.5 | 2.0 | 2.3 | 2.1 | 1.8 | 2.0 |
| needle color 2nd yr | 1.3 | 2.4 | 1.3 | 1.2 | 2.0 | 2.4 |
| root covering | 2.0 | 3.0 | 1.7 | 1.9 | 1.9 | 2.3 |
| network of roots | 2.1 | 2.7 | 2.1 | 2.3 | 2.1 | 2.9 |

*mineral fertilizer = 12:12:18 (N:P:K)
needle color: 1 = dark, 5 = light
root covering: 1 = heavy, 5 = light
network of roots: 1 = even, intensive; 5 = uneven, extensive.

**Example 3: Fertilization of reforestation plantations at high altitude:**

| State of development of plants | | | | |
|---|---|---|---|---|
| | Site I | | Site II | |
| treatment | number of plants | average develop. | number of plants | average develop |
| unfertilised control | 27 | 0.26 | 45 | 0.11 |
| mineral fert.* 30 g/plant | 32 | 0.875 | 40 | 0.43 |
| BBM 15 g/plant | 27 | 0.89 | 45 | 0.44 |
| 30 g/plant | 33 | 1.03 | 39 | 0.44 |
| 60 g/plant | 31 | 1.06 | 41 | 0.51 |
| 100 g/plant | 28 | 0.96 | 44 | 0.52 |

* mineral fertilizer = Nitramoncal[tm]
Site I: high sunlight; Site II: low sunlight
State of development: 0 = buds closed, 1 = buds opening to about 1 cm shoot length, 2 = shoot length longer than 1 cm

When comparing the results of fertilization using approximately equivalent quantities of nitrogen (e.g., 30 g mineral fertilizer (12% N), 60 g BBM (5.5% N)), the superiority of the BBM is evident. For example, whilst the root mass is reduced by the mineral fertilizer, the total weight is increased up to 20% when using the BBM. The number of side shoots is also increased using BBM, compared with the unfertilized control. The fine root covering and the network of roots are improved, especially when compared with the mineral fertilizer.

**Example 4: Fertilization of ski slopes:**

| Glungezer (Austria) 1600-1800 m above sea-level, ground cover in percentage* | | |
|---|---|---|
| | 1984 | 1985 |
| unfertilised control | 26 | 28 |
| BBM | 63 | 78 |
| mineral fertilizer | 68 | 62 |
| BBM: 1000 kg/ha, application in spring mineral fertilizer: 400 kg/ha N:P:K (13:13:21), application in spring | | |

* e.g. 26% indicates that 26% of the soil is covered by growth while 74% of the soil remains exposed.

In contrast to the mineral fertilizer, the BBM produces a slower but constant increase in ground cover. Already in the second year, the superiority of the fertilizer of this invention is visible.

## Claims

1. A fertilizer substantially free from heavy metals comprising an admixture of bacterial biomass and potassium magnesium fertilizer, wherein said bacterial biomass is produced by the further fermentation of the liquid phase obtained in an antibiotic fermentation.

2. A fertilizer according to claim 1 wherein said admixture comprises, by weight, 90 to 97 % dry mass, at least 55% organic substance, 4.9 to 6.1 % organically bound nitrogen, 3.9 to 5 % $P_2O_5$, 2.9 to 3.7 % $K_2O$, 7 to 9 % CaO, and 0.8 to 1.4 % MgO.

3. A fertilizer according to claim 1 comprising an admixture of about 94 % bacterial biomass and 6 % potassium magnesium fertilizer.

4. A fertilizer according to claim 1 wherein said antibiotic is penicillin.

5. A process for the production of a bacterial biomass comprising the steps of treating the liquid phase obtained in an antibiotic fermentation with a neutralizing agent, and subjecting said liquid phase to a further fermentation to produce said bacterial biomass.

6. A process according to claim 5 further comprising the step of combining said liquid phase with the organic waste product from a different fermentation process prior to said further fermentation.

7. A process according to claim 5, wherein said further fermentation is carried out at about 30° C in the presence of oxygen.

8. A process according to claim 5 wherein said antibiotic is penicillin.

9. A method for fertilizing alpine pastures comprising applying the fertilizer of claim 1 to said alpine pastures.

10. A method for fertilizing ski slopes comprising applying the fertilizer of claim 1 to said ski slopes.

11. A method for revitalising forest plantations comprising applying the fertilizer of claim 1 to said forest plantations.

12. A bacterial biomass produced according to the process of claim 5.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| D,A | CHEMICAL ABSTRACTS, vol. 73, no. 21, 23rd November 1970, page 298, abstract no. 108872g, Columbus, Ohio, US; & JP-A-70 14 091 (RESEARCH INSTITUTE FOR PRODUCTION DEVELOPMENT) 20-05-1970 * Abstract * | 1,5 | C 05 F 11/00 C 05 G 1/00 |
| A | CHEMICAL ABSTRACTS, vol. 106, no. 21, May 1987, page 634, abstract no. 175281b, Columbus, Ohio, US; & JP-A-61 270 289 (KYOWA HAKKO KOGYO CO., LTD) 29-11-1986 * Abstract * | 1,5 | |
| A | EP-A-0 266 737 (BIOCHEMIE GESELLSCHAFT mbH) | | |
| A | GB-A- 854 918 (J. VINTIKA et al.) * Claims * | 1,5 | |

|  | TECHNICAL FIELDS SEARCHED (Int. Cl.4) |
|---|---|
|  | C 05 F C 12 N |

The present search report has been drawn up for all claims

| Place of search | Date of completion of the search | Examiner |
|---|---|---|
| THE HAGUE | 30-08-1989 | SCHUT,R.J. |